# FASCICULE DE BREVET EUROPEEN

(11) **EP 0 696 557 B1**
(45) Date de publication et mention de la délivrance du brevet: **29.12.1999**
(21) Numéro de dépôt: 95401541.8
(22) Date de dépôt: 28.06.1995
(51) Int. Cl.: C04B 24/10, C04B 24/38, C04B 28/08, B02C 23/06

(54) **Agent de mouture pour ciments**
Mahlhilfsmittel für Zement
Grinding agent for cement

(30) Priorité: 13.07.1994 FR 9408715
(43) Date de publication de la demande: 14.02.1996
(73) Titulaire: CIMENTS FRANCAIS, F-92800 Puteaux (FR)
(72) Inventeur: Briat, Jean, F-27950 St. Marcel (FR); Fontaine, Catherine, F-78240 Chambourcy (FR)
(74) Mandataire: Loyer, Bertrand

(56) Documents cités:
- EP-A- 0 232 202
- DE-A- 2 455 005
- DE-A- 2 707 677
- GB-A- 13 542
- GB-A- 208 370
- GB-A- 424 110
- US-A- 2 480 020
- US-A- 4 375 987
- DATABASE WPI Section Ch, Week 9122 15 Juillet 1990 Derwent Publications Ltd., London, GB; Class L02, AN 91-162197 XP002005640 & SU-A-1 578 106 (CONS. PROD. RES. INST.) , 15 Juillet 1990
- J.FALBE ET ALL: "Römpp Chemie Lexicon, p. 4452-4453" 9. ED., 1994, GEORG THIEME VERLAG, STUTGART-NEW YORK

## Description

La présente invention concerne un agent de mouture utilisé pour la séparation des grains de ciments et le broyage du ciment, cet agent de mouture étant composé à partir de dérivés de sirops de sucres.

Les agents de mouture sont des produits utilisés pour améliorer le broyage en évitant l'agglomération des particules principalement par neutralisation des charges électrostatiques.

Il est connu en soi d'utiliser comme agents de mouture des glycols, des amines et leurs sels, des alcools, des lignosulfonates et des acides gras et leurs sels.

L'utilisation de dérivés de sirops de glucose et plus particulièrement les dérivés obtenus par hydrogénation ou oxydation de polysaccharides est connue en tant qu'adjuvant pour la mise en oeuvre des bétons, mortiers et coulis. Il est rappelé qu'un adjuvant est un additif utilisé lors de la mise en oeuvre des bétons mortiers et coulis pour améliorer leurs caractéristiques en les adaptant à l'usage. Les adjuvants peuvent être utilisés par exemple en tant que fluidifiant, réducteur d'eau, entraîneur d'air, retardateur ou accélérateur de prise.

Un tel adjuvant est décrit dans le brevet français n° 2.597.473 qui a pour objet un procédé d'oxydation par voie catalytique des di-tri-oligo et polysaccharides en acides polyhydroxycarboxyliques. Le produit obtenu par ce procédé est appliqué à des liants hydrauliques en tant que fluidifiant, réducteur d'eau et est moins retardateur que d'autres adjuvants ayant la même fonction.

Le brevet US-A-4375987 décrit un adjuvant sous la forme d'une émulsion huile dans l'eau dont la fraction solide comprend un certain nombre de produits parmi lesquels des hydrates de carbone, tel que le sucrose, qui sont utilisés comme retardateurs de prise.

Par ailleurs, le document GB-A-13542 décrit un matériau à base de tannin qui, mélangé avec le gypse ou une autre forme de sulfate de calcium, confère au ciment des propriétés telles qu'une meilleure imperméabilité et une résistance plus élevée.

Le brevet FOSROC n° 1.425.822 décrit un procédé d'oxydation des polysaccharides permettant d'obtenir un adjuvant qui est réducteur d'eau.

Le brevet GRACE n° 4.423.801 décrit un adjuvant obtenu par oxydation des sirops de glucose liquide.

Enfin, le brevet KAO SOAP n° 4.073.658 décrit un produit obtenu par hydrogénation des polysaccharides qui possède des propriétés réductrices d'eau lorsqu'il est utilisé en tant qu'additif.

La présente invention a pour objet l'utilisation d'un agent de mouture obtenu à partir d'un produit d'oxydation ou d'hydrogénation de sirops de sucres qui a pour avantage de faciliter la séparation des grains de ciment et d'améliorer le broyage du ciment contenant du laitier.

L'invention concerne l'utilisation selon la revendication 1.

Les dérivés de sirops de sucres sont obtenus par oxydation ou hydrogénation desdits sirops de sucres.

Ledit agent de mouture obtenu à partir de dérivés de sirops de sucres est utilisé dans des proportions pondérales en constituant actif par rapport au ciment allant de 0,01 à 1 % et de préférence de 0,015 % à 0,25 %.

Ledit agent de mouture se révèle particulièrement efficace pour des ciments comprenant du laitier, et peut-être associé à tous autres agents de moutures connus.

Un mode de réalisation selon l'invention est l'utilisation d'un agent de mouture obtenu par oxydation de polysaccharides en acide polyhydroxycarboxylique ou par hydrogénation de polysaccharides en hydrolisats d'oligosaccharides.

L'invention est encore remarquable par le fait que pour ladite utilisation l'agent de mouture est constitué à partir de dérivés de sirops de glucose.

Les essais illustrés ci-après permettent de mieux comprendre l'invention.

Le tableau n° 1 représente des essais réalisés en laboratoire, pour lequel le broyeur est un récipient fermé où la granulométrie de la matière évolue en fonction du temps de broyage. Les paramètres à comparer sont le temps de broyage (équivalent à l'énergie consommée) et la granulométrie du produit broyé. Le critère retenu pour mesurer la granulométrie est la surface spécifique BLAINE selon la norme NF P 15476. Pour cet essai de laboratoire, on a comparé les résultats du broyage sans agent de mouture (essai n° 1), et avec un agent traditionnel tel qu'amines, éthanol amines ou acétates d'éthanol amines (essai n° 2), avec les résultats de broyage avec des agents de mouture selon l'invention, c'est-à-dire dérivés oxydés (essai n° 3) et dérivés hydrogénés (essai n° 4) de sirops de sucres sur la préparation d'un CPA qui est un ciment Portland (CPA) composé d'au moins 97 % de Clinker, le reste étant du Filler.

Le tableau n° 2 représente un essai réalisé avec un broyeur industriel qui est un tube ouvert où la matière rentre brute et d'où elle ressort broyée. Les paramètres à comparer sont le débit du broyeur (équivalent à l'énergie consommée) et la granulométrie du produit broyé selon le critère de la surface spécifique BLAINE. Pour cet essai, on a comparé l'action d'un agent de mouture traditionnel tel qu'amines, éthanol amines ou acétates d'éthanol amines et celle d'un agent de mouture selon l'invention, c'est-à-dire un sirop de sucre oxydé sur la fabrication d'un ciment clinker (CLK) contenant 80 % de laitier et 20 % de Clinker.

Le tableau n° 1 met en évidence :
- une diminution du temps de broyage entre un broyage sans agent de mouture (essai n° 1) et des broyages avec des agents de mouture selon l'invention (essais n° 3 et 4);
- une légère diminution du temps de broyage entre un broyage avec un agent de mouture traditionnel (essai n° 2) et des broyages avec des agents de mouture selon l'invention (essais n° 3 et 4).

Le tableau n° 2 met en évidence que pour un débit du broyeur identique (consommation énergétique spécifique en KWh/t identique), on obtient des surfaces spécifiques BLAINE identiques en utilisant soit un agent de mouture traditionnel, soit un agent de mouture selon l'invention.

Ceci confirme la fonction agent de mouture de sirops de sucres oxydés et des sirops de sucres hydrogénés. On constate même une action légèrement supérieure des agents de mouture selon l'invention par rapport aux agents de mouture traditionnels.

De plus, à la teneur utilisée comme agent de mouture, on remarque une diminution de E/C (rapport massique eau sur ciment) et donc un effet réducteur d'eau pour une même maniabilité (mesurée selon la norme P 18 452), ceci étant déjà décrit et confirmé; ainsi qu'une augmentation des résistances mécaniques (à la compression R_{c} et à la flexion ou R_{f} aux jeunes âges, c'est-à-dire 1 et 2 jours).

Enfin, les différents essais ont confirmé que l'agent de mouture selon l'invention évitait l'agglomération des particules de ciment sur les boulets et le revêtement intérieur du broyeur. Il peut-être utilisé seul en solution aqueuse ou mélangé avec d'autres agents de mouture et il 'est révélé particulièrement efficace pour les ciments comprenant du laitier.

**TABLEAU N° 1**

| Ciment CPA 55 Broyage laboratoire | | | | |
|---|---|---|---|---|
| Essais | 1 | 2 | 3 | 4 |
| Agent de mouture | sans | traditionnel | sirop de glucose oxydé | dérivés hydrogénée |
| Dosage en matière active (ppm) | / | 150 | 180 | 180 |
| Temps de broyage | 120 | 115 | 105 | 108 |
| Surface Blaine (cm2/g) | 3540 | 3580 | 3450 | 3500 |
| Gain en temps de de broyage | / | 4,2% | 12,5% | 10% |

**TABLEAU N° 2**

| Essais industriels Ciment CLK | | | |
|---|---|---|---|
| Agent de mouture | Traditionnel | Sirop de glucose oxydé | |
| Dosage en matière active (ppm) | 175,2 | 195 | |
| Débit du broyeur (1/h) | 18 | 18 | |
| Teneur en SO₃ | 4,22 | 4,39 | |
| Surface Blaine (cm²/g) | 4030 | 4030 | |
| E/C | 0,5 | 0,5 | 0,48 |
| Début de prise | 5h10 | 6h00 | 5h40 |
| Fin de prise | 6h10 | 7h05 | 7h10 |
| Maniabilité(s) | 4 | 2,8 | 4 |
| Rf 1j | 0,4 | 0,5 | 0,4 |
| RC 1j | 1,1 | 1,3(+18%) | 1,5(+36%) |
| Rf 2j | 1,1 | 1,5 | 1,6 |
| RC 2j | 4,3 | 5,4(+25,6%) | 5,6(+30%) |
| Rf 7j | 4,9 | 4,5 | 5,3 |
| RC 7j | 27,4 | 26,8(-2%) | 27,0(-1,5%) |
| Rf 28j | 7,2 | 8,2 | 7,7 |
| RC 28j | 35,3 | 34,1(-3,4%) | 36,9(+4,5%) |

## Revendications

1. Utilisation, pour améliorer le broyage du ciment contenant du laitier, d'un agent de mouture, constitué essentiellement de dérivés de sirop de sucres oxydé ou hydrogéné.

2. Utilisation de l'agent de mouture selon la revendication 1 dans des proportions pondérales en constituant actif par rapport au ciment allant de 0,01% à 1 %, de préférence 0,015 % à 0,25 %.

3. Utilisation de l'agent de mouture selon la revendication 1, caractérisé en ce que ledit agent de mouture est associé à tout autre agent de mouture connu.

4. Utilisation de l'agent de mouture selon l'une quelconque des revendications précédentes, caractérisé en ce que l'agent de mouture est un acide polyhydroxycarboxylique susceptible d'être obtenu par oxydation de polysaccharides.

5. Utilisation de l'agent de mouture selon l'une quelconque des revendications 1 à 3, caractérisé en ce que l'agent de mouture est un hydrolysat d'oligosaccharides susceptible d'être obtenu par hydrogénation de polysaccharides.

6. Utilisation de l'agent de mouture selon la revendication 1, caractérisé en ce que ledit agent de mouture est constitué de dérivés de sirops de glucose.

## Claims

1. Use, in order to improve grinding of cement which contains slag, of a grinding agent consisting essentially of oxidized or hydrogenated sugar syrup derivatives.

2. Use of the grinding agent according to claim 1 in weight amounts of active component from 0,01 % to 1 %, preferably 0,015 % to 0,25 %.

3. Use of the grinding agent according to claim 1 characterized in that said grinding agent is combined to any known grinding agent.

4. Use of the grinding agent according to any preceeding claims characterized in that the grinding agent is a polyhydroxy carboxylic acid that could be obtained by oxidation of polysaccharides.

5. Use of the grinding agent according to any claims 1 to 3, characterized in that the grinding agent is a oligosaccharide hydrolyzate that could be obtained by hydrogenation of polysaccharides.

6. Use of the grinding agent according to claim 1 characterized in that said grinding agent consists of glucose syrup derivatives.

## Patentansprüche

1. Verwendung eines Mahlhilfsmittels, das im wesentlichen aus Derivaten von oxidiertem oder hydriertem Zuckersirup besteht, zum Verbessern der Vermahlung von schlackehaltigem Zement.

2. Verwendung des Mahlhilfsmittels nach Anspruch 1, wobei die Gewichtsverhältnisse von aktivem Bestandteil zu Zement im Bereich von 0,01 % bis 1 %, vorzugsweise 0,015 % bis 0,25 %, liegen.

3. Verwendung des Mahlhilfsmittels nach Anspruch 1, dadurch gekennzeichnet, daß das Mahlhilfsmittel irgendeinem anderen bekannten Mahlhilfsmittel beigefügt ist.

4. Verwendung des Mahlhilfsmittels nach einem der vorhergehenden Ansprüche, dadurch gekennzeichnet, daß das Mahlhilfsmittel eine Polyhydroxycarbonsäure ist, die durch Oxidation von Polysacchariden erhalten werden kann.

5. Verwendung des Mahlhilfsmittels nach einem der Ansprüche 1 bis 3, dadurch gekennzeichnet, daß das Mahlhilfsmittel ein Oligosaccharid-Hydrolysat ist, das durch Hydrierung von Polysacchariden erhatten werden kann.

6. Verwendung des Mahlhilfsmittels nach Anspruch 1, dadurch gekennzeichnet, daß das Mahlhilfsmittel aus Glucosesirup-Derivaten gebildet ist.
